# EUROPÄISCHE PATENTANMELDUNG

(11) **EP 4 635 684 A2**
(43) Veröffentlichungstag der Anmeldung: **22.10.2025**
(21) Anmeldenummer: 25200256.3
(22) Anmeldetag: 27.07.2017
(51) Int. Cl.: B25J 9/12

(54) **KNICKARMROBOTER**

(30) Priorität: 04.10.2016 DE 102016118785
(62) Teilanmeldung aus: 24162350.3
(71) Anmelder: Broetje-Automation GmbH, 26180 Rastede (DE)
(72) Erfinder: Logemann, Torsten, 26215 Wiefelstede (DE)
(74) Vertreter: Gottschald Patentanwälte Partnerschaft mbB

(57) **Zusammenfassung**

Die Erfindung betrifft einen Knickarmroboter mit einer seriellen Kinematik (2) zur Positionierung eines Endeffektors (3), wobei die Kinematik (2) mindestens eine Teilkinematik (6, 7) mit einem Robotergelenk (6.1), mit einem dem Robotergelenk (6.1) vorgelagerten Roboterglied (6.2) und einem dem Robotergelenk (6.1) nachgelagerten Roboterglied (6.3) aufweist. Es wird vorgeschlagen, dass die mindestens eine Teilkinematik (6, 7) zur Verstellung der Roboterglieder (6.2, 6.3) zueinander einen Linearantrieb (6.4) mit einem entlang einer Linearachse (6.5) verstellbaren Antriebselement (6.6) und eine Koppel (6.7) mit zwei entlang der Koppelerstreckung voneinander beabstandeten Koppelgelenken (6.8, 6.9) aufweist, dass der Linearantrieb (6.4) an einem ersten Roboterglied (6.10) der Teilkinematik (6) angeordnet ist und dass die Koppel (6.7) einerseits an dem Antriebselement (6.6) des Linearantriebs (6.4) und andererseits an dem zweiten Roboterglied (6.11) der Teilkinematik (6), beabstandet von der geometrischen Achse (6.1a) des Robotergelenks (6.1) der Teilkinematik (6), angelenkt ist.

## Beschreibung

Die Erfindung betrifft einen Knickarmroboter mit einer seriellen Kinematik zur Positionierung eines Endeffektors gemäß dem Oberbegriff von Anspruch 1.

Der in Rede stehende Knickarmroboter findet in verschiedenen Bereichen der Automatisierungstechnik Anwendung. Vorliegend stehen Automatisierungsaufgaben betreffend die Herstellung von Strukturbauteilen von Luftfahrzeugen im Vordergrund, bei denen am Endeffektor Prozesskräfte auftreten.

Der Positionierung des Endeffektors unter Prozesskräften stellt besondere Anforderungen an die Kinematik des Knickarmroboters. Ein die Positioniergenauigkeit beeinflussender Faktor ist das toleranzbedingte Spiel in der Kinematik des Knickarmroboters, das sich durch die Vorgabe enger Toleranzbereiche, durch ein Verspannen von Antriebsachsen o. dgl. reduzieren lässt. Ein anderer Aspekt, der hier im Vordergrund steht, ist die Steifigkeit der Kinematik des Knickarmroboters. Bei unzureichender Steifigkeit der Kinematik können Prozesskräfte zu einer ungewünschten Abweichung in der Positionierung des Endeffektors führen.

Die Steifigkeit der Kinematik des Knickarmroboters wird durch den Antriebsstrang, der die Verstellung der Kinematik bewirkt, wesentlich bestimmt. Der Antriebsstrang, der regelmäßig mehrere Teilstränge aus einem Antriebsmotor und mindestens einem dem Antriebsmotor nachgeschalteten Getriebe aufweist, muss den Prozesskräften derart entgegenwirken, dass sich möglichst geringe Abweichungen in der Positionierung des Endeffektors ergeben. Dies wiederum stellt zusätzliche Anforderungen an die Steifigkeit des Antriebsstrangs insgesamt.

Der Erfindung liegt das Problem zugrunde, einen Knickarmroboter mit einer seriellen Kinematik zur Positionierung eines Endeffektors anzugeben, der eine hohe Steifigkeit im Hinblick auf am Endeffektor auftretende Prozesskräfte aufweist.

Zunächst wird davon ausgegangen, dass die Kinematik des Knickarmroboters mindestens eine Teilkinematik mit einem Robotergelenk, mit einem dem Robotergelenk vorgelagerten Roboterglied und einem dem Robotergelenk nachgelagerten Roboterglied aufweist.

Wesentlich ist nun die grundsätzliche Überlegung, dass durch die Ausstattung des Antriebsstrangs mit einem Linearantrieb und einer dem Linearantrieb zugeordneten Koppel bei geeigneter Auslegung erreicht werden kann, dass die auf den Endeffektor einwirkenden Prozesskräfte, die ein Drehmoment auf das betreffende Robotergelenk ausüben, nur vergleichsweise geringe Kräfte auf den Linearantrieb entlang dessen Linearachse erzeugen. Diese Auslegung ist vorschlagsgemäß so getroffen, dass die mindestens eine Teilkinematik einen Linearantrieb mit einem entlang einer Linearachse verstellbaren Antriebselement und eine Koppel mit zwei entlang der Koppelerstreckung voneinander beabstandeten Koppelgelenken aufweist, wobei der Linearantrieb an einem ersten Roboterglied von den obigen beiden vorgelagerten und nachgelagerten Robotergliedern der Teilkinematik angeordnet ist und wobei die Koppel einerseits an dem Antriebselement des Linearantriebs und andererseits an dem zweiten, verbleibenden Roboterglied von den obigen beiden vorgelagerten und nachgelagerten Robotergliedern der Teilkinematik, beanstandet von dem Robotergelenk der Teilkinematik, angelenkt ist.

Bei den besonders bevorzugten Ausgestaltungen gemäß den Ansprüchen 2 bis 4 handelt es sich bei dem Linearantrieb um einen Spindel-Spindelmutter-Antrieb, wobei bei den weiter bevorzugten Ausgestaltungen gemäß den Ansprüchen 3 und 4 die geometrische Spindelachse der Spindel ortsfest an dem ersten Roboterglied der Teilkinematik gelegen ist. Dies vereinfacht die Lagerung der Spindel und senkt somit die Herstellkosten.

Von besonderer Bedeutung ist vorliegend die bevorzugte Ausgestaltung gemäß Anspruch 5, nach der das Antriebselement der Längsführung an dem ersten Roboterglied in einer Variante separat von dem Linearantrieb in einer Führungsrichtung längsgeführt ist. Damit lässt sich bei einem obigen Spindel-Spindelmutter-Antrieb erreichen, dass jegliche am Endeffektor angreifende Prozesskräfte keine resultierende Kraft in einer Richtung quer zu der geometrischen Spindelachse auf die Spindel ausüben. Dies bedeutet, dass eine Positionierungenauigkeit, die auf eine eventuelle Verbiegung der Spindel zurückgehen könnte, nicht auftritt.

Im statischen Zustand der Teilkinematik, also bei festgesetztem Linearantrieb, bilden das Robotergelenk und die beiden Koppelgelenke zusammen mit der Koppel und den jeweiligen Abschnitten der Roboterglieder, die zwischen den Koppelgelenken und dem Robotergelenk gelegen sind, eine Anordnung nach Art eines Stabdreiecks aus, dessen Ecken durch das Robotergelenk und durch die Koppelgelenke definiert sind, wobei die Dreiecksfläche quer zu der geometrischen Achse des Robotergelenks ausgerichtet ist.

Die weiter bevorzugten Ausgestaltungen gemäß den Ansprüchen 8 bis 11 betreffen einen Knickarmroboter, der mit zwei vorschlagsgemäßen Teilkinematiken ausgestattet sind. Dabei ist es in einer bevorzugten Variante gemäß Anspruch 8 vorgesehen, dass ein gemeinschaftliches Roboterglied sowohl der ersten als auch der zweiten Teilkinematik zugeordnet ist. Grundsätzlich können auch mehr als zwei vorschlagsgemäße Teilkinematiken vorgesehen sein, die selbstredend unterschiedlich parametriert sein können.

Im Folgenden wird die Erfindung anhand einer lediglich ein Ausführungsbeispiel darstellenden Zeichnung näher erläutert. In der Zeichnung zeigt
- Fig. 1: einen vorschlagsgemäßen Knickarmroboter in einer Seitenansicht,
- Fig. 2: das Kinematikschema des Knickarmroboters gemäß Fig. 1 und
- Fig. 3: den Knickarmroboter gemäß Fig. 1, jeweils in einer perspektivischen Ansicht, a) in Blickrichtung IIIa und b) in Blickrichtung IIIb.

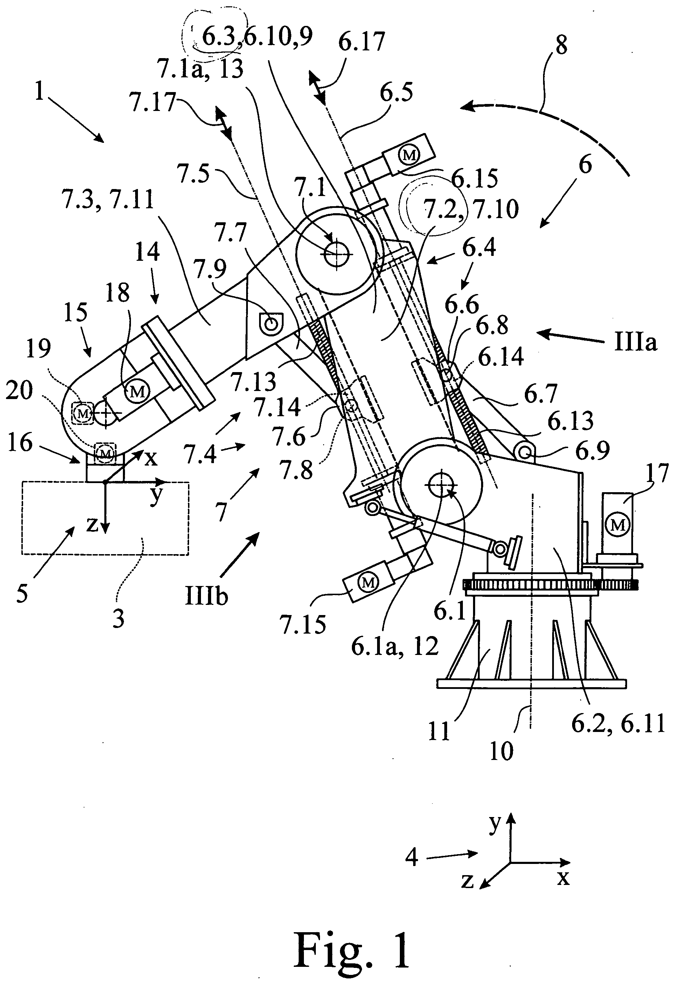

Der in der Zeichnung dargestellte Knickarmroboter 1 ist mit einer seriellen Kinematik 2 zur Positionierung eines Endeffektors 3 ausgestattet. In Fig. 1 ist ein Bezugskoordinatensystem 4 dargestellt, relativ zu dem der Endeffektor 3, insbesondere ein Werkzeugkoordinatensystem 5 am Endeffektor 3, positionierbar ist.

Die Kinematik 2 des Knickarmroboters 1 umfasst vorliegend mindestens eine Teilkinematik 6, 7, hier und vorzugsweise genau zwei vorschlagsgemäße Teilkinematiken 6, 7. Die beiden Teilkinematiken 6, 7 sind von grundsätzlich identischer Struktur, können jedoch unterschiedlich parametriert sein. Dies ergibt sich beispielsweise aus der Darstellung gemäß Fig. 1.

Im Folgenden wird in erster Linie die erste Teilkinematik 6 erläutert. Alle diesbezüglichen Ausführungen gelten für die zweite Teilkinematik 7 entsprechend. Insbesondere sind alle für die erste Teilkinematik erläuterten Merkmale und Vorteile auf die zweite Teilkinematik 7 und umgekehrt anwendbar.

Die Teilkinematik 6 ist mit einem Robotergelenk 6.1, mit einem dem Robotergelenk 6.1 vorgelagerten Roboterglied 6.2 und einem dem Robotergelenk 6.1 nachgelagerten Roboterglied 6.3 ausgestattet. Die Begriffe "vorgelagert" und "nachgelagert" sind auf eine Vorwärtsrichtung 8, die entlang der seriellen Kinematik 2 auf den Endeffektor 3 zuläuft, bezogen. Die beiden Roboterglieder 6.2 und 6.3 sind über das Robotergelenk 6.1 miteinander schwenkgekoppelt.

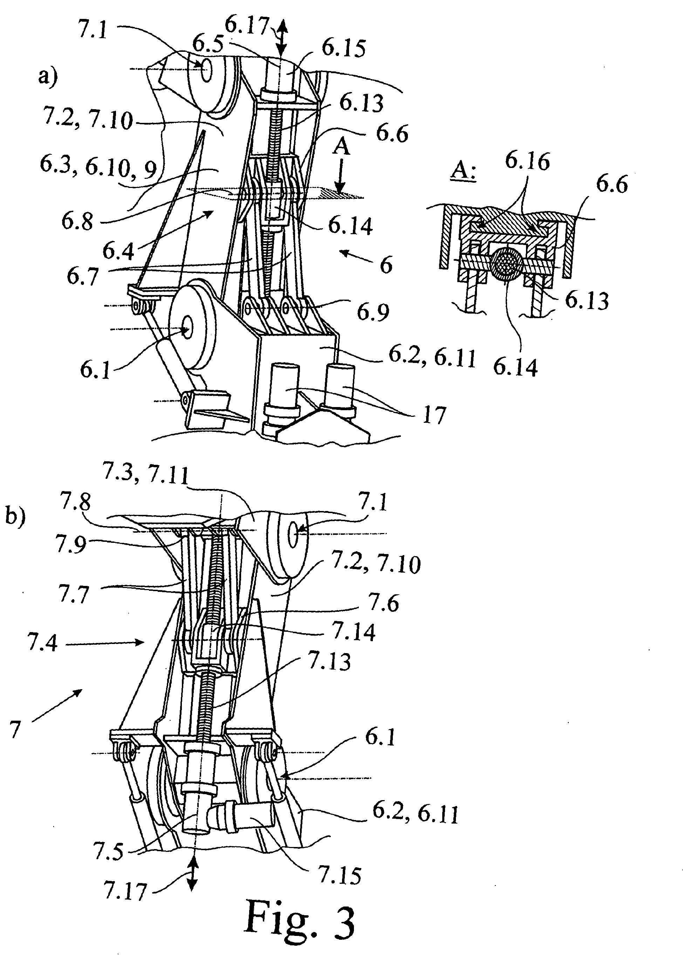

Die Teilkinematik 6 weist zur Verstellung der Roboterglieder 6.2, 6.3 zueinander einen Linearantrieb 6.4 mit einem entlang einer Linearachse 6.5 verstellbaren Antriebselement 6.6 sowie eine Koppel 6.7 mit zwei entlang der Koppelerstreckung voneinander beabstandeten Koppelgelenken 6.8, 6.9 auf. Die Koppel 6.7 ist hier als doppelte Koppel mit zwei parallel verlaufenden Einzelkoppeln ausgestaltet, wie in Fig. 3a gezeigt ist. Mit "Koppelerstreckung" ist vorliegend die Längserstreckung der Koppel 6.7 gemeint.

Der Linearantrieb 6.4 ist an einem ersten Roboterglied 6.10 der Teilkinematik 6 angeordnet. Dabei ist das erste Roboterglied 6.10 eines der beiden vorgelagerten und nachgelagerten Roboterglieder 6.2 und 6.3.

Die Koppel 6.7 ist einerseits an dem Antriebselement 6.6 des Linearantriebs 6.4 und andererseits an dem zweiten, verbleibenden Roboterglied 6.11 der Teilkinematik 6 angeordnet, und zwar um einen Abstand 6.12 beabstandet von der geometrischen Achse 6.1a des Robotergelenks 6.1 der Teilkinematik 6. Dabei ist das zweite Roboterglied 6.11 das andere der beiden vorgelagerten und nachgelagerten Roboterglieder 6.2 und 6.3.

Aus dem obigen ergibt sich, dass eine Verstellung des in Fig. 1 dargestellten Antriebselements 6.6 am Roboterglied 6.3 nach oben eine entsprechende Verstellung des Roboterglieds 6.3 im Uhrzeigersinn bewirkt, während eine Verstellung des Antriebselements 6.6 am Roboterglied 6.3 nach unten eine entsprechende Verstellung des Roboterglieds 6.3 entgegen dem Uhrzeigersinn erzeugt.

Die zweite Teilkinematik 7 ist entsprechend aufgebaut und weist ein Robotergelenk 7.1, ein vorgelagertes Roboterglied 7.2, ein nachgelagertes Roboterglied 7.3, einen Linearantrieb 7.4, dessen Antriebselement 7.6 entlang der Linearachse 7.5 verstellbar ist, eine Koppel 7.7 mit zwei Koppelgelenken 7.8 und 7.9, ein erstes Roboterglied 7.1 und ein zweites Roboterglied 7.11 sowie einen entsprechenden Abstand zwischen dem Koppelgelenk 7.8 und dem Robotergelenk 7.1 auf. Die Funktionsweise der zweiten Teilkinematik 7 entspricht der Funktionsweise der ersten Teilkinematik 6, so dass eine Verstellung des Antriebselements 7.6 in Fig. 1 nach oben eine entsprechende Verstellung des Robotergliedes 7.3 im Uhrzeigersinn und eine Verstellung des Antriebselements 7.6 in Fig. 1 nach unten eine entsprechende Verstellung des Robotergliedes 7.3 entgegen dem Uhrzeigersinn erzeugt.

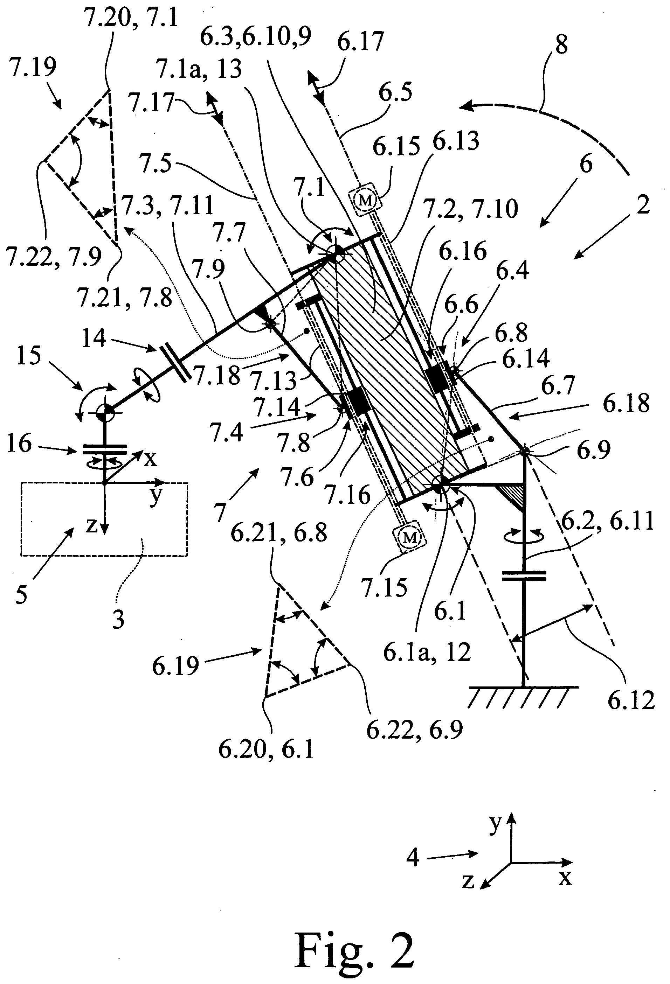

Fig. 2 zeigt die Kinematik 2 des vorschlagsgemäßen Knickarmroboters 1 in einer schematischen Darstellung. Hier wird deutlich, dass sich das Robotergelenk 6.1, die beiden Koppelgelenke 6.8, 6.9 zusammen mit der Koppel 6.7 und den jeweiligen Abschnitten der Roboterglieder 6.2, 6.3, die zwischen den Koppelgelenken 6.8, 6.9 und dem Robotergelenk 6.1 gelegen sind, sowie zusammen mit dem Linearantrieb 6.4 eine Art Schubkurbelkinematik bildet. Dabei handelt es sich bei der Kurbel gewissermaßen um den Abschnitt des Robotergliedes 6.2, der zwischen dem den Linearantrieb 6.4 abgewandten Koppelgelenk 6.9 und dem Robotergelenk 6.1 gelegen ist.

Bei dem dargestellten und insoweit bevorzugten Ausführungsbeispiel ist der Linearantrieb 6.4 ein Spindel-Spindelmutter-Antrieb mit einer Spindel 6.13 und einer Spindelmutter 6.14, wobei das Antriebselement 6.6 die Spindelmutter 6.14 oder die Spindel 6.13, hier und vorzugsweise die Spindelmutter 6. 14, umfasst. In besonders bevorzugter Ausgestaltung ist das System aus Spindel 6.13 und Spindelmutter 6.14 als Kugelrollspindelsystem oder als Planetenrollgewindetriebsystem ausgestaltet. Speziell mit dem Planetenrollengewindetriebsystem lassen sich hohe Lasten mit hoher Genauigkeit verstellen.

Ein speziell herstellungstechnisch interessanter Aspekt bei dem dargestellten Knickarmroboter 1 ist die Tatsache, dass die Spindel 6.13 der Teilkinematik 6 so an dem ersten, den Linearantrieb 6.4 aufweisenden Roboterglied 6.10 der Teilkinematik 6 gelagert ist, dass die geometrische Spindelachse 6.13a an dem ersten Roboterglied 6.10 der Teilkinematik 6 ortsfest gelegen ist. Im Einzelnen ist es hier und vorzugsweise so, dass die Spindel 6.13 axial fest, aber um die axiale Spindelachse 6.13a drehbar an dem ersten Roboterglied 6.10 der Teilkinematik 6 gelagert ist, wobei die Spindelmutter 6.14 axial verlagerbar, aber bezogen auf die geometrische Spindelachse 6.13a drehfest an dem ersten Roboterglied 6.10 der Teilkinematik 6 gelagert ist. Dabei ist weiter vorzugsweise ein Spindelantrieb 6.15 zum Antrieb der Spindel 6.13 vorgesehen, der in besonders bevorzugter Ausgestaltung als Servoantrieb, also als geregelter Antrieb, ausgestaltet ist. Auch hinsichtlich der Montage des Spindelantriebs 6.15 ist es vorteilhaft, dass die Spindel 6.14, wie oben angesprochen, an dem ersten Roboterglied 6.10 der Teilkinematik 6 angeordnet ist.

Die obigen Ausführungen zu der ersten Teilkinematik 6 betreffend die Ausgestaltung des Linearantriebs 6.4 als Spindel-Spindelmutter-Antrieb gelten für die zweite Teilkinematik 7 entsprechend. Auch hier sind entsprechend die Komponenten Spindel 7.13, Spindelmutter 7.14 und Spindelantrieb 7.15 vorgesehen, die in obiger Weise miteinander wechselwirken.

An dem ersten Roboterglied 6.10 der Teilkinematik 6 ist eine Längsführung 6.16 angeordnet, mittels der das Antriebselement 6.6 an dem ersten Roboterglied 6.10 in einer Führungsrichtung 6.17 längsgeführt ist. Die Längsführung 6.16 ist hier und vorzugsweise separat von dem Linearantrieb 6.4 ausgestaltet. Eine Führung in diesem Sinne sorgt nicht nur für die Einhaltung der Bewegungsrichtung des Antriebselements 6.6 entlang der Führungsrichtung 6.17, sondern verhindert auch das Abheben des Antriebselements 6.6 von der Führung. Dabei ist es in besonders bevorzugter Ausgestaltung vorgesehen, dass die Längsführung 6.16 Führungskräfte auf das Antriebselement 6.6 ausübt, die sowohl quer zu der geometrischen Achse 6.1a des Robotergelenks 6.1 als auch quer zu der Führungsrichtung 6.17 ausgerichtet sind. Hier und vorzugsweise ist es sogar so, dass die Längsführung 6.16 Führungskräfte in allen Richtungen quer zu der Führungsrichtung 6.17 auf das Antriebselement 6.6 ausübt. Hier und vorzugsweise handelt es sich um die Längsführung 6.16 um eine Flachführung. Alternativ kann es sich bei der Längsführung auch um eine Schwalbenschwanzführung oder um eine Prismenführung handeln.

Die zweite Teilkinematik 7 ist mit einer entsprechenden Längsführung 7.16 mit zugeordneter Führungsrichtung 7.17 ausgestattet, die wiederum funktionsgleich zu der erläuterten Längsführung 6.16 der ersten Teilkinematik 6 ist.

Die Vorteilhaftigkeit der vorschlagsgemäßen Kinematik 2 lässt sich am besten bei der Betrachtung des statischen Zustands der betreffenden Teilkinematik 6, also bei festgelegtem Linearantrieb 6.4, erkennen. Wesentlich ist dabei, dass für den statischen Zustand der Teilkinematik 6 das Robotergelenk 6.1 und die beiden Koppelgelenke 6.8, 6.9 zusammen mit der Koppel 6.7 und den jeweiligen Abschnitten der Roboterglieder 6.10, 6.11, die zwischen den Koppelgelenken 6.8, 6.9 und dem Robotergelenk 6.1 gelegen sind, eine Anordnung nach Art eines Stabdreiecks 6.18 ausbilden. Die dem Stabdreieck 6.18 zugeordneten Kraftwirkungslinien bilden ein Kraftwirkungsdreieck 6.19 aus, dessen Ecken durch das Robotergelenk 6.1 und durch die Koppelgelenke 6.8, 6.9 definiert sind. Eine besonders stabile Anordnung ergibt sich dadurch, dass dessen Innenwinkel in einem Arbeitsbereich des Knickarmroboters 1, vorzugsweise stets, jeweils größer als 15°, vorzugsweise größer als 20°, weiter vorzugsweise größer als 30°, sind. Alternativ oder zusätzlich ist es in diesem Sinne vorgesehen, dass der Innenwinkel an dem Koppelgelenk 6.9, das dem Antriebselement 6.6 abgewandt ist, in einem Arbeitsbereich des Knickarmroboters 1, vorzugsweise stets, weniger als 150°, vorzugsweise weniger als 140°, weiter vorzugsweise weniger als 120° und weiter vorzugsweise weniger als 100° beträgt.

Alle Ausführungen zu der ersten Kinematik 6 betreffend das Stabdreieck 6.18 gelten für die zweite Teilkinematik 7 entsprechend, die ebenfalls eine Anordnung nach Art eines Stabdreiecks 7.18 ausbildet. Entsprechend zeigt die zweite Teilkinematik 7 neben dem Stabdreieck 7.18 ein Kraftwirkungsdreieck 7.19, das die Ecken 7.20, 7.21 und 7.22 aufweist.

Hier und vorzugsweise ist es so, dass die zweite Teilkinematik 7 der ersten Teilkinematik 6 nachgelagert ist, wie am besten der Darstellung gemäß Fig. 1 zu entnehmen ist. Dabei ist es weiter vorzugsweise so, dass das nachgelagerte Roboterglied 6.3 der ersten Teilkinematik 6 gleichzeitig das vorgelagerte Roboterglied 7.2 der zweiten Teilkinematik 7 ist, so dass dieses Roboterglied ein gemeinschaftliches Roboterglied 9 der beiden Teilkinematiken 6, 7 bereitstellt. In besonders bevorzugter Ausgestaltung sind die Linearantriebe 6.4, 7.4 beider Teilkinematiken 6, 7 an dem gemeinschaftlichen Roboterglied 9 angeordnet. Entsprechend ist es hier und vorzugsweise vorgesehen, dass die Spindeln 6.13, 7.13, die Spindelmuttern 6.14, 7.14 und die Spindelantriebe 6.15, 7.15 jeweils an dem gemeinschaftlichen Roboterglied 9 angeordnet sind.

Entsprechend ist es, wie der Darstellung gemäß Fig. 1 weiter zu entnehmen ist, vorzugsweise vorgesehen, dass das erste, den Linearantrieb 6.4 aufweisende Roboterglied 6.10 der ersten Teilkinematik 6 gleichzeitig das erste, den Linearantrieb 7.4 aufweisende Roboterglied 7.10 der zweiten Teilkinematik 7 ist und somit das gemeinschaftliche Roboterglied 9 der beiden Teilkinematiken 6, 7 bereitstellt.

Das erste, den Linearantrieb 6.4 aufweisende Roboterglied 6.10 der ersten Teilkinematik 6 ist dem zweiten Roboterglied 6.11 der ersten Teilkinematik 6 nachgelagert. Bei dem ersten Roboterglied 6.10 handelt es sich also um das oben angesprochene, nachgelagerte Roboterglied 6.3 der ersten Teilkinematik 6, während es sich bei dem zweiten Roboterglied 6.11 um das oben angesprochene, vorgelagerte Roboterglied 6.2 der ersten Teilkinematik 6 handelt.

Andersherum ist es bei der zweiten Teilkinematik 7 vorgesehen, dass das erste, den Linearantrieb 7.4 aufweisende Roboterglied 7.10 dem zweiten Roboterglied 7.11 vorgelagert ist. Hier handelt es sich bei dem ersten Roboterglied 7.10 also um das im obigen Sinne vorgelagerte Roboterglied 7.2, während es sich bei dem zweiten Roboterglied 7.11 um das oben angesprochene, nachgelagerte Roboterglied 7.3 handelt.

Im Ergebnis bedeutet dies, dass die erste Teilkinematik 6 gewissermaßen umgekehrt zu der zweiten Teilkinematik 7 betrieben wird, wodurch sich u.a. die in Fig. 1 gezeigte, besonders kompakte Bauform ergibt. Die obige Kompaktheit wird dadurch weiter unterstützt, dass die Linearachsen 6.5, 7.5 der beiden Teilkinematiken 6, 7 beabstandet voneinander, jedoch parallel zueinander ausgerichtet sind.

Die geometrischen Achsen 6.1a und 7.1a der beiden Robotergelenke 6.1 und 7.1 sind hier und vorzugsweise parallel zueinander ausgerichtet. Dies erlaubt eine relativ große Reichweite des Knickarmroboters 1 in der in Fig. 1 gezeigten X-Richtung des Bezugskoordinatensystems 4.

Die beiden Linearachsen 6.5, 7.5 der beiden Teilkinematiken 6, 7 erstrecken sich weiter vorzugsweise parallel zu einer Verbindungslinie zwischen den geometrischen Achsen 6.1a und 7.1a der beiden Robotergelenke 6.1 und 7.1, wobei sich diese Verbindungslinie quer zu den beiden Roboterachsen 6.1a und 7.1a erstreckt. Diese zueinander parallele Ausrichtung lässt sich fertigungstechnisch besonders einfach umsetzen.

Aus der in Fig. 1 dargestellten Situation heraus bewirkt nun eine Prozesskraft in negativer Z-Richtung des Werkzeugkoordinatensystems 5 ein Drehmoment um das Robotergelenk 7.1 der zweiten Teilkinematik 7, das über die Koppel 7.7 abgestützt wird. Durch die Ausbildung des obigen Stabdreiecks 7.18 wird über die Koppel 7.7 nur ein vergleichsweise geringer Kraftanteil über das Antriebselement 7.6 in Richtung der Linearachse 7.5 in den Linearantrieb 7.4 eingeleitet, so dass der Linearantrieb 7.4 eine entsprechend geringe Gegenkraft aufwenden muss, um eine hohe Steifigkeit zu garantieren. Der verbleibende Kraftanteil quer zu der Linearachse 7.5 wird in die Längsführung 7.16 eingeleitet und erzeugt insoweit keine ungewünschten Verformungen.

Gleichzeitig bewirkt die obige Prozesskraft in negativer Z-Richtung des Werkzeugkoordinatensystems 5 ein Drehmoment um das Robotergelenk 6.1 der ersten Teilkinematik 6, das über die Koppel 6.7 abgestützt wird. Durch die Ausbildung des obigen Stabdreiecks 6.18 wird über die Koppel 6.7 nur ein vergleichsweise geringer Kraftanteil über das Antriebselement 6.6 in Richtung der Linearachse 6.5 in den Linearantrieb 6.4 eingeleitet, so dass der Linearantrieb 6.4 wiederum eine entsprechend geringe Gegenkraft aufwenden muss, um eine hohe Steifigkeit zu garantieren. Der verbleibende Kraftanteil quer zu der Linearachse 6.5 wird wiederum in die Längsführung 6.16 eingeleitet und erzeugt auch insoweit keine ungewünschten Verformungen.

Hier wird deutlich, dass der Existenz der Längsführungen 6.16 und 7.16 für die resultierende Steifigkeit des Knickarmroboters 1 insgesamt besondere Bedeutung zukommt.

Der vorschlagsgemäße Knickarmroboter 1 ist vorzugsweise als sechsachsiger Knickarmroboter ausgestaltet. Dabei ist es so, dass es sich bei der ersten geometrischen Positionierachse 10 um eine Achse in Y-Richtung des Bezugskoordinatensystems 4 handelt. Das Roboterglied 6.2 ist gegenüber einem Grundkörper 11 um die geometrische Positionierachse 10 schwenkbar. Die zweite Positionierachse 12 und die dritte Positionierachse 13 werden von den geometrischen Achsen 6.1a, 7.1a der Robotergelenke 6.1, 7.1 bereitgestellt. An das Roboterglied 7.3 schließen sich noch in an sich üblicher Weise eine vierte, eine fünfte und eine sechste Positionierachse 14, 15, 16 an, die in der Zeichnung nur angedeutet sind und denen für die vorschlagsgemäße Lehre eine nur untergeordnete Bedeutung zukommt.

Der ersten Positionierachse 10 und den vierten, fünften und sechsten Positionierachsen 14, 15, 16 sind Achsantriebe 17-20 zugeordnet. Die Achsantriebe 17-20 und/oder die Spindelantriebe 6.15, 7.15 können zur Vermeidung eines toleranzbedingten Spiels zumindest zum Teil mit zwei Antriebsmotoren ausgestattet sein, die stets geringfügig gegeneinander verspannt sind. Andere Alternativen für die Reduzierung toleranzbedingten Spiels sind grundsätzlich denkbar.

Der vorschlagsgemäße Knickarmroboter 1 wird vorzugsweise im Rahmen der Durchführung von Automatisierungsaufgaben betreffend die Herstellung von Strukturbauteilen von Luftfahrzeugen eingesetzt. Entsprechend handelt es sich bei dem Endeffektor 3 vorzugsweise um eine Nieteinheit, um eine Handhabungseinheit oder um eine Faserlegeeinheit. Andere Ausgestaltungen des Endeffektors 3 sind denkbar.

## Patentansprüche

1. Knickarmroboter mit einer seriellen Kinematik (2) zur Positionierung eines Endeffektors (3), wobei die Kinematik (2) mindestens eine Teilkinematik (6, 7) mit einem Robotergelenk (6.1), mit einem dem Robotergelenk (6.1) vorgelagerten Roboterglied (6.2) und einem dem Robotergelenk (6.1) nachgelagerten Roboterglied (6.3) aufweist,
**dadurch gekennzeichnet,**
**dass** die mindestens eine Teilkinematik (6, 7) zur Verstellung der Roboterglieder (6.2, 6.3) zueinander einen Linearantrieb (6.4) mit einem entlang einer Linearachse (6.5) verstellbaren Antriebselement (6.6) und eine Koppel (6.7) mit zwei entlang der Koppelerstreckung voneinander beabstandeten Koppelgelenken (6.8, 6.9) aufweist, dass der Linearantrieb (6.4) an einem ersten Roboterglied (6.10) der Teilkinematik (6) angeordnet ist und dass die Koppel (6.7) einerseits an dem Antriebselement (6.6) des Linearantriebs (6.4) und andererseits an dem zweiten, verbleibenden Roboterglied (6.11) der Teilkinematik (6), beabstandet von der geometrischen Achse (6.1a) des Robotergelenks (6.1) der Teilkinematik (6), angelenkt ist.

2. Knickarmroboter nach Anspruch 1, **dadurch gekennzeichnet, dass** der Linearantrieb (6.4) ein Spindel-Spindelmutter-Antrieb mit einer Spindel (6.13) und einer Spindelmutter (6.14) ist und dass das Antriebselement (6.6) die Spindelmutter (6.14) oder die Spindel (6.13) umfasst, vorzugsweise, dass das System aus Spindel (6.13) und Spindelmutter (6.14) als Kugelrollspindelsystem oder als Planetenrollengewindetriebsystem ausgestaltet ist.

3. Knickarmroboter nach Anspruch 2, **dadurch gekennzeichnet, dass** die Spindel (6.13) so an dem ersten Roboterglied (6.10) der Teilkinematik (6) gelagert ist, dass die geometrische Spindelachse (6.13a) an dem ersten Roboterglied (6.10) der Teilkinematik (6) ortsfest gelegen ist.

4. Knickarmroboter nach Anspruch 2 oder 3, **dadurch gekennzeichnet, dass** die Spindel (6.13) axialfest, aber drehbar an dem ersten Roboterglied (6.10) der Teilkinematik (6) gelagert ist und dass die Spindelmutter (6.14) axial verlagerbar, aber drehfest an dem ersten Roboterglied (6.10) der Teilkinematik (6) gelagert ist, vorzugsweise, dass ein Spindelantrieb (6.15) zum Antrieb der Spindel (6.13) vorgesehen ist, weiter vorzugsweise, dass der Spindelantrieb (6.15) als Servoantrieb ausgestaltet ist.

5. Knickarmroboter nach einem der vorhergehenden Ansprüche, **dadurch gekennzeichnet, dass** an dem ersten Roboterglied (6.10) der Teilkinematik (6), vorzugsweise separat von dem Linearantrieb (6.4), eine Längsführung (6.16) angeordnet ist, mittels der das Antriebselement (6.6) an dem ersten Roboterglied (6.10) in einer Führungsrichtung (6.17) längsgeführt ist, vorzugsweise, dass die Längsführung (6.16) Führungskräfte in allen Richtungen quer zu der Führungsrichtung (6.17) auf das Antriebselement (6.6) ausübt.

6. Knickarmroboter nach einem der vorhergehenden Ansprüche, **dadurch gekennzeichnet, dass** für den statischen Zustand der Teilkinematik (6) das Robotergelenk (6.1) und die beiden Koppelgelenke (6.8, 6.9) zusammen mit der Koppel (6.7) und den jeweiligen Abschnitten der Roboterglieder (6.2, 6.3), die zwischen den Koppelgelenken (6.8, 6.9) und dem Robotergelenk (6.1) gelegen sind, eine Anordnung nach Art eines Stabdreiecks (6.18) ausbilden.

7. Knickarmroboter nach Anspruch 6, **dadurch gekennzeichnet, dass** die dem Stabdreieck (6.18) zugeordneten Kraftwirkungslinien ein Kraftwirkungsdreieck (6.19) ausbilden, dessen Ecken (6.20, 6.21, 6.22) durch das Robotergelenk (6.1) und durch die Koppelgelenke (6.8, 6.9) definiert sind und dessen Innenwinkel in einem Arbeitsbereich des Knickarmroboters, vorzugsweise stets, jeweils größer als 15°, vorzugsweise größer als 20°, weiter vorzugsweise größer als 30°, sind, und/oder, dass der Innenwinkel an dem Koppelgelenk (6.9), das dem Antriebselement (6.6) abgewandt ist, in einem Arbeitsbereich des Knickarmroboters, vorzugsweise stets, weniger als 150°, vorzugsweise weniger als 140°, weiter vorzugsweise weniger als 120° und weiter vorzugsweise weniger als 100° beträgt.

8. Knickarmroboter nach einem der vorhergehenden Ansprüche, **dadurch gekennzeichnet, dass** die Kinematik (2) eine erste Teilkinematik (6) der mindestens einen Teilkinematik (6, 7) und eine zweite Teilkinematik (7) der mindestens einen Teilkinematik (6, 7) aufweist, wobei die zweite Teilkinematik (7) der ersten Teilkinematik (6) nachgelagert ist, vorzugsweise, dass das nachgelagerte Roboterglied (6.3) der ersten Teilkinematik (6) gleichzeitig das vorgelagerte Roboterglied (7.2) der zweiten Teilkinematik (7) ist und somit ein gemeinschaftliches Roboterglied (9) der beiden Teilkinematiken (6, 7) bereitstellt, weiter vorzugsweise, dass an dem gemeinschaftlichen Roboterglied (9) die Linearantriebe (6.4, 7.4) beider Teilkinematiken (6, 7) angeordnet sind.

9. Knickarmroboter nach Anspruch 8, **dadurch gekennzeichnet, dass** das erste, den Linearantrieb (6.4) aufweisende Roboterglied (6.10) der ersten Teilkinematik (6) gleichzeitig das erste, den Linearantrieb (7.4) aufweisende Roboterglied (7.10) der zweiten Teilkinematik (7) ist und somit das gemeinschaftliche Roboterglied (9) der beiden Teilkinematiken (6, 7) bereitstellt.

10. Knickarmroboter nach einem der vorhergehenden Ansprüche, **dadurch gekennzeichnet, dass** das erste, den Linearantrieb (6.4) aufweisende Roboterglied (6.10) der ersten Teilkinematik (6) dem zweiten Roboterglied (6.11) der ersten Teilkinematik (6) nachgelagert ist und dass das erste, den Linearantrieb (7.4) aufweisende Roboterglied (7.10) der zweiten Teilkinematik (7) dem zweiten Roboterglied (7.11) der zweiten Teilkinematik (7) vorgelagert ist.

11. Knickarmroboter nach einem der vorhergehenden Ansprüche, **dadurch gekennzeichnet, dass** die Linearachsen (6.5, 7.5) der beiden Teilkinematiken (6, 7) beabstandet voneinander, jedoch parallel zueinander, ausgerichtet sind.

12. Knickarmroboter nach einem der vorhergehenden Ansprüche, **dadurch gekennzeichnet, dass** der Endeffektor (3) als Nieteinheit, als Handhabungseinheit oder als Faserlegeeinheit ausgestaltet ist.
